# FASCICULE DE BREVET EUROPEEN

(11) **EP 1 371 553 B1**
(45) Date de publication et mention de la délivrance du brevet: **02.03.2005**
(21) Numéro de dépôt: 03101663.7
(22) Date de dépôt: 06.06.2003
(51) Int. Cl.: B64C 25/04, B64C 25/10

(54) **Dispositif de montage d'un train d'atterrissage sur une structure d'aeronef**
Vorrichtung zur Befestigung eines Landefahrwerks auf eine Flugzeugstruktur
Device for supporting a landing gear on an aircraft structure

(30) Priorité: 10.06.2002 FR 0207086
(43) Date de publication de la demande: 17.12.2003
(73) Titulaire: AIRBUS France, 31060 Toulouse Cedex 03 (FR)
(72) Inventeur: Reniau, Grégory, 31170, Tournefeuille (FR)
(74) Mandataire: Poulin, Gérard

(56) Documents cités:
- EP-A- 0 899 191
- FR-A- 2 793 210

## Description

### Domaine technique

L'invention concerne un dispositif permettant de monter un train d'atterrissage sur une structure d'aéronef, selon un axe de rotation autorisant un pivotement du train entre une position de vol dans laquelle le train est rentré dans le fuselage et une position d'atterrissage, dans laquelle le train est sorti du fuselage.

Plus précisément, le dispositif de montage selon l'invention est conçu pour transmettre à la structure de l'aéronef tous les efforts appliqués au train d'atterrissage, de telle sorte que les efforts exercés selon l'axe géométrique de l'axe de rotation du train, appelés par la suite "efforts axiaux", soient tous transmis à la structure de l'aéronef en une seule extrémité dudit axe de rotation, et que seuls des efforts de compression soient appliqués sur le train d'atterrissage.

L'invention peut être appliquée à tous les aéronefs.

### Etat de la technique

Un train d'atterrissage d'aéronef, tel qu'un train placé sous le fuselage, est généralement monté sous la structure de l'aéronef par l'intermédiaire d'un certain nombre d'axes de rotation dont les extrémités sont reçues dans des paliers. Ces paliers transmettent à la structure de l'aéronef des efforts axiaux, ainsi que des efforts exercés perpendiculairement aux axes géométriques desdits axes de rotation, appelés par la suite "efforts radiaux".

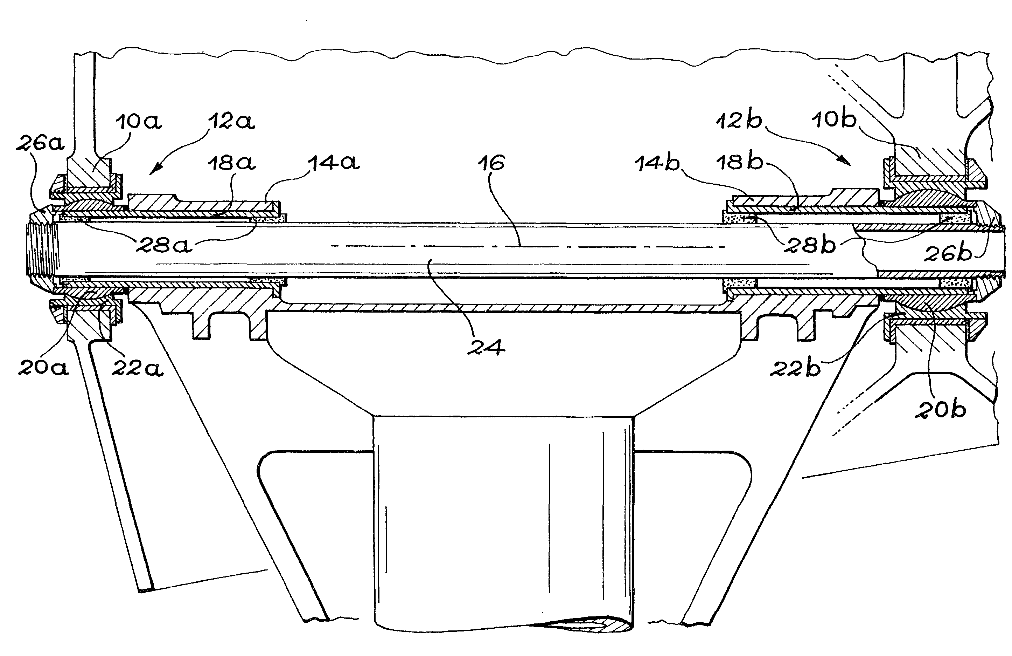

Comme l'illustre la figure 1 du document FR-A-2 793 210, il est connu de monter un axe de rotation d'un train sous fuselage équipant les avions gros porteurs, tels que le "Boeing 747", dans un palier extérieur lié directement au fuselage et dans un palier intérieur monté dans une poutre ventrale qui fait partie intégrante du fuselage. Plus précisément, l'axe de rotation est alors immobilisé en translation dans le palier extérieur. Ainsi, tous les efforts axiaux sont transmis au palier extérieur alors que les efforts radiaux sont répartis symétriquement entre les deux paliers.

Cet agencement présente l'inconvénient de nécessiter un renforcement de la partie du fuselage sur laquelle est monté le palier extérieur.

De plus, l'utilisation d'un agencement inversé, dans lequel les efforts axiaux seraient transmis au palier intérieur est également exclu. En effet, cela impliquerait un renforcement de l'attache par laquelle le palier est fixé à la poutre ventrale. De plus, cela conduirait à appliquer alternativement sur la ferrure du train d'atterrissage des efforts de traction et de compression, alors qu'il est souhaitable de n'appliquer à cette ferrure que des efforts de compression.

De surcroît, un axe de rotation monté de cette manière présente l'inconvénient d'être dissymétrique, ce qui impose d'utiliser deux matrices différentes pour fabriquer les axes correspondant aux trains d'atterrissage droit et gauche de l'aéronef.

Enfin, du fait que les deux paliers sont fixes, l'assemblage est difficile à réaliser si les deux paliers ne sont pas parfaitement alignés.

Un autre montage connu est illustré sur la figure 2 du document FR-A-2 793 210. Dans ce cas, l'axe de rotation est supporté à ses extrémités par deux paliers à rotule, de façon totalement symétrique. Le palier à rotule extérieur reprend les efforts axiaux exercés vers l'extérieur et le palier à rotule intérieur reprend les efforts axiaux exercés vers l'intérieur. Comme dans le montage précédent, les efforts radiaux sont répartis entre les deux paliers.

Par rapport au précédent, ce montage a pour avantages d'être symétrique et facile à assembler.

Toutefois, l'application à l'un ou l'autre des paliers à rotule de tous les efforts axiaux, selon qu'ils sont dirigés vers l'intérieur ou vers l'extérieur, nécessite à la fois un renforcement de l'attache sur laquelle est fixé le palier intérieur et un renforcement de la partie du fuselage dans laquelle est monté le palier extérieur. Cette technique de montage ne peut donc pas être employée quand le train d'atterrissage est installé loin de l'axe central de l'avion, lorsque l'espace entre le logement dans lequel est reçu le train et l'extérieur du fuselage est tellement réduit que la structure de l'avion située du côté extérieur du fuselage n'est pas suffisamment rigide pour supporter les efforts axiaux.

Le document FR-A-2 793 210 décrit un dispositif de montage d'un train d'atterrissage permettant de transmettre les efforts axiaux à la structure de l'avion par l'intermédiaire d'un seul des deux paliers supportant l'axe de rotation. Deux demi axes de rotation sont montés dans des parties intérieure et extérieure de la structure de l'avion par l'intermédiaire de paliers à rotule. Une barre de traction, dite "de reprise d'efforts" est logée à l'intérieur des demi axes et ses extrémités sont fixées aux parties intérieure et extérieure de la structure de l'avion au moyen de brides et d'écrous.

Dans cet agencement, des efforts axiaux orientés vers l'extérieur sont transmis à la structure extérieure de l'avion par compression de la ferrure du train, qui prend appui sur la rotule du palier extérieur. Toutefois, du fait que la structure extérieure est solidaire de la barre de traction par l'intermédiaire de la bride et de l'écrou, lesdits efforts axiaux sont repris par la barre de traction et appliqués à la structure intérieure de l'avion par le palier intérieur.

Cet agencement permet donc de reprendre sur le palier intérieur l'ensemble des efforts axiaux appliqués au train d'atterrissage, en n'appliquant que des efforts de compression sur la ferrure dudit train.

Toutefois, lorsque les efforts axiaux sont importants et lorsque la structure qui maintient le palier extérieur n'est pas suffisamment rigide, certains inconvénients peuvent apparaître.

Ainsi, les efforts axiaux peuvent provoquer un allongement de la barre de traction d'une longueur ΔL₁ non négligeable. Cet allongement a pour conséquence que la structure externe de l'avion se déplace, elle aussi, d'une distance ΔL₁ vers l'extérieur du fuselage.

Parallèlement, la structure interne de l'avion se déforme sous l'effet des efforts appliqués au palier intérieur, ce qui provoque un déplacement de ce palier d'une distance ΔL₂ vers l'extérieur du fuselage. Ce déplacement vient s'ajouter au précédent et augmente donc la déformation de la structure externe de l'avion. Le dispositif de montage décrit dans la demande FR-A-2 793 210 s'avère donc insuffisant lorsque les efforts axiaux sont importants.

Par ailleurs, lorsque ce dispositif de l'art antérieur est soumis à des efforts axiaux importants dirigés vers l'intérieur, ces efforts sont appliqués sur la structure interne de l'avion par l'intermédiaire du palier intérieur. La structure interne se déforme alors sous l'effet de ces efforts, ce qui provoque un déplacement du palier intérieur d'une distance ΔL₃ vers l'intérieur du fuselage. La structure externe est entraînée d'une même distance ΔL₃ vers l'intérieur de l'avion par l'intermédiaire de la barre de traction. Le dispositif nuit alors à la ferrure externe, en provoquant inutilement sa déformation.

Lors de l'utilisation d'un dispositif de montage de train tel que décrit dans le document FR-A-2 793 210 dans le cas d'efforts axiaux importants, la structure externe de l'avion est donc soumise à des déplacements ΔL₁ + ΔL₂ vers l'extérieur de l'avion ou à des déplacements ΔL₃ vers l'intérieur de l'avion, selon l'axe géométrique de l'axe de rotation du train. Cela conduit à des flexions de sens alternés de ladite structure externe et, par conséquent, à des risques de fatigue de celle-ci.

Par ailleurs, du fait que la barre de traction est fixée par ses deux extrémités à la structure de l'avion par encastrement au moyen de brides et d'écrous, ces extrémités sont soumises à des moments d'encastrement nuisibles au niveau des brides, en cas de déformation de cette structure entraînant un désalignement des paliers.

De plus, du fait que la barre de traction est uniquement fixée à ses deux extrémités sans aucun guidage sur sa longueur, qui atteint près de 2 mètres, elle peut être soumise à des vibrations qui peuvent entraîner sa dégradation. Il est à noter que la réduction de ces vibrations qui serait obtenue en ajoutant des bagues de guidage entre la barre de traction et les deux demi axes présenterait l'inconvénient d'empêcher le libre rotulage des demi axes au niveau des paliers.

### Exposé de l'invention

L'invention a précisément pour objet un dispositif de montage d'un train d'atterrissage sur une structure d'aéronef, constituant un perfectionnement au dispositif décrit dans le document FR-A-2 793 210 et dont la conception originale permet de résoudre les différents problèmes posés par les dispositifs existants, et notamment de ne transmettre les efforts axiaux qu'à l'une des deux parties de la structure de l'avion, même lorsque ces efforts sont suffisamment importants pour engendrer des déformations.

Conformément à l'invention, ce résultat est obtenu au moyen d'un dispositif de montage d'un train d'atterrissage sur une structure d'aéronef, le dispositif comprenant deux tronçons d'axe alignés selon un même axe géométrique et solidaires d'une ferrure du train d'atterrissage, deux organes supports solidaires de la structure d'aéronef, deux cages de rotule respectivement fixées dans chacun desdits organes supports, deux noix de rotule montées dans les cages de rotules et respectivement fixées sur chacun des tronçons d'axe et une barre de traction reliant les deux organes supports selon ledit axe géométrique, caractérisé en ce que l'un des deux organes supports est apte à se déformer selon ledit axe géométrique et en ce que la barre de traction relie les organes supports par ses extrémités qui prennent appui sur les noix des roulements, en exerçant une force de traction entre celles-ci.

Du fait que l'un des deux organes supports est apte à se déformer selon l'axe géométrique commun aux tronçons d'axe, cet organe support peut suivre les déplacements du palier correspondant imposés par la barre de traction, sans que cela entraîne de phénomène de flexion non maîtrisée et donc de fatigue de la structure.

De plus, du fait que la barre de traction prend appui par ses extrémités sur les noix des rotules des paliers, de façon à exercer entre celles-ci une force de traction, la barre de traction ne subit pas de moment d'encastrement à ses extrémités lors d'un désalignement des paliers provoqué par des déformations de la structure de l'avion dues à l'effet combiné des efforts axiaux et radiaux.

Dans le cas où un tel dispositif est utilisé sur un train d'atterrissage décalé latéralement par rapport à un axe longitudinal de l'aéronef, l'organe support apte à se déformer est de préférence celui qui est décalé vers l'extérieur de l'aéronef par rapport à l'autre organe support.

Dans les modes de réalisation préférés de l'invention, l'organe support apte à se déformer selon l'axe géométrique commun aux tronçons d'axe est une cloison flexible ou articulée.

Avantageusement encore, des bagues de guidage sont fixées dans les extrémités en vis-à-vis des deux tronçons d'axe et la barre de traction est montée en ajustement glissant à l'intérieur desdites bagues. Ces bagues assurent un guidage de la barre de traction qui a pour effet de limiter les vibrations.

### Brève description des dessins

On décrira à présent, à titre d'exemple illustratif et non limitatif, un mode de réalisation préféré de l'invention, en se référant au dessin annexé, dans lequel la figure unique est une vue en coupe qui représente un dispositif de montage conforme à l'invention, prise selon son axe géométrique.

### Description détaillée d'un mode de réalisation préféré de l'invention

Comme l'illustre la figure unique, le dispositif selon l'invention assure le montage d'un train d'atterrissage sur la structure d'un aéronef. Plus précisément, le mode de réalisation décrit concerne le cas d'un train d'atterrissage monté latéralement sous le fuselage de l'aéronef.

Le dispositif de montage selon l'invention comprend deux organes supports 10a, 10b solidaires de la structure de l'aéronef. Dans l'exemple décrit, l'organe support 10a est décalé vers l'extérieur de l'aéronef, c'est-à-dire en éloignement de l'axe longitudinal de celui-ci, par rapport à l'organe support 10b. Pour cette raison, les organes supports 10a et 10b sont appelés respectivement "organe support extérieur" et "organe support intérieur" dans la suite du texte.

Les organes supports 10a et 10b assurent le montage du train d'atterrissage par l'intermédiaire de deux paliers à rotules 12a et 12b. De façon plus précise, chacun des paliers à rotules 12a, 12b supporte un tronçon d'axe ou demi axe 14a, 14b solidaire d'une ferrure du train d'atterrissage. Les deux tronçons d'axe 14a, 14b font partie du dispositif de montage selon l'invention. Ils présentent un axe géométrique commun identifié par la référence 16 sur la figure et orienté selon une direction transversale par rapport à l'aéronef.

Comme le montre la figure, les deux tronçons d'axe 14a et 14b sont creux et chacun d'entre eux est emmanché sur un coussinet 18a, 18b. Les extrémités les plus proches des coussinets 18a, 18b comportent des collerettes qui sont en appui sur des faces terminales en vis-à-vis des tronçons d'axe 14a et 14b. Les extrémités opposées des coussinets 18a et 18b font saillie à l'extérieur des tronçons d'axe 14a, 14b, pour supporter des noix de rotule 20a, 20b qui font partie intégrante des paliers à rotules 12a, 12b.

Les noix de rotule 20a, 20b sont elles-mêmes montées dans des cages de rotule 22a, 22b, respectivement fixées dans des trous alignés formés dans les organes supports 10a, 10b.

Conformément à l'invention, le dispositif de montage est complété par une barre de traction 24 qui relie les organes supports 10a et 10b selon l'axe géométrique 16 des tronçons d'axe 14a et 14b. De façon plus précise, la barre de traction 24 traverse les coussinets 18a et 18b sur toute leur longueur, de façon à venir prendre appui sur les faces d'extrémité des noix de rotule 20a et 20b opposées aux tronçons d'axe 14a et 14b. Dans la pratique, cet appui est assuré par des écrous 26a et 26b vissés sur des parties filetées prévues aux extrémités de la barre de traction 24.

Dans l'agencement qui vient d'être décrit, la barre de traction 24 s'appuie à chacune de ses extrémités sur les noix 20a, 20b des rotules des paliers 12a, 12b, lesquels sont solidaires de la structure de l'avion.

De plus, conformément à l'invention l'organe support 10a qui supporte le palier à rotule 12a est déformable. Il peut notamment s'agir d'une cloison flexible ou articulée. Cela présente l'avantage que l'organe support externe 10a peut suivre les déplacements du palier à rotule 12a imposés par la barre de traction 24 sans entraîner de phénomène de flexion non maîtrisé, et donc de fatigue, de la structure.

Ainsi, dans le cas où le dispositif doit transmettre des efforts axiaux orientés vers la gauche sur la figure, c'est-à-dire vers l'extérieur de l'avion lorsque le palier à rotule 12a est le palier extérieur, la ferrure du train d'atterrissage appuie sur la rotule de ce palier extérieur 12a, à laquelle elle transmet lesdits efforts. Du fait que la barre de traction 24 s'appuie sur la noix 20a de cette rotule, elle reprend ces efforts et les transmet à la rotule de l'autre palier 12b, sur laquelle elle s'appuie également. Par l'intermédiaire de ce dernier palier 12b, la rotule correspondante transmet les efforts à l'organe support interne 10b de l'avion. Le déplacement axial du palier 12b dû à l'allongement de la barre de traction 24 et à la déformation de l'organe support interne 10b de l'avion est sans conséquence sur ledit organe puisque l'organe support 10a est lui-même déformable.

Dans le cas où le dispositif doit transmettre des efforts axiaux orientés vers la droite sur la figure, c'est-à-dire vers l'intérieur de l'avion lorsque le palier à rotule 12a est le palier extérieur, ces efforts sont transmis à l'organe support interne 10b de l'avion par la rotule du palier 12b contre laquelle prend appui, dans ce cas, la ferrure du train d'atterrissage.

Le dispositif de montage selon l'invention permet donc bien de transmettre tous les efforts axiaux sur le seul organe support interne 10b solidaire de la structure de l'avion, que ces efforts soient orientés vers l'intérieur de l'avion ou vers l'extérieur. L'organe support externe 10b n'est donc pas soumis à ces efforts, ou seulement très peu, selon que l'organe support 10a est articulé ou flexible.

Par ailleurs, selon le sens des efforts axiaux à transmettre, seul l'un ou l'autre des tronçons d'axe 14a, 14b liés à la ferrure du train d'atterrissage prend appui sur la noix 20a, 20b de la rotule correspondante. Cette ferrure est donc soumise uniquement à des efforts de compression et jamais à des efforts de traction qui risqueraient de l'endommager.

De surcroît, étant donné que la barre de traction 24 prend appui à ses extrémités sur les noix 20a et 20b des rotules des paliers 12a et 12b et non directement sur les organes support 10a et 10b, ladite barre de traction ne subit pas de moment d'encastrement à ses extrémités lorsque la structure de l'avion se déforme sous l'effet combiné des efforts axiaux et radiaux pouvant conduire à un désalignement des paliers 12a et 12b. Ledit désalignement est donc compensé par le mouvement de pivotement des rotules et la barre de traction 24 logée à l'intérieur des tronçons d'axe 14a et 14b suit les mouvements de ces derniers, qui suivent eux-mêmes les mouvements des noix 20a et 20b des rotules.

Avantageusement et comme l'illustre également la figure unique, des bagues de guidage 28a et 28b sont montées dans chacune des extrémités des coussinets 18a et 18b, c'est-à-dire dans leurs extrémités les plus proches ainsi que dans leurs extrémités les plus éloignées. La barre de traction 24 est alors montée en ajustement glissant à l'intérieur de ces bagues de guidage 28a, 28b. Ce montage permet à la barre de traction de tourner librement autour de l'axe 16.

Dans l'agencement qui vient d'être décrit, les bagues de guidage 28a et 28b assurent un guidage de la barre de traction 24 apte à limiter l'apparition de vibrations. En outre, les fonctions de reprise des efforts radiaux et axiaux sont bien dissociées puisque les deux tronçons d'axe reprennent les efforts radiaux alors que la barre de traction reprend seulement les efforts axiaux. Cela permet de limiter les efforts de frottement lors des déplacements axiaux sous faible charge.

## Revendications

1. Dispositif de montage d'un train d'atterrissage sur une structure d'aéronef, le dispositif comprenant deux tronçons d'axe (14a, 14b) alignés selon un même axe géométrique (16) et solidaires d'une ferrure du train d'atterrissage, deux organes supports (10a, 10b) solidaires de la structure d'aéronef, deux cages de rotule (22a, 22b) respectivement fixées dans chacun desdits organes supports (10a, 10b), deux noix de rotule (20a, 20b) montées dans les cages de rotules (22a, 22b) et respectivement fixées sur chacun des tronçons d'axe (14a, 14b) et une barre de traction (24) reliant les deux organes supports (10a, 10b) selon ledit axe géométrique (16), et l'un (10a) des deux organes supports étant apte à se déformer selon ledit axe géométrique (16) et **caractérisé en ce que** la barre de traction (24) relie les organes supports (10a, 10b) par ses extrémités qui prennent appui sur les noix des roulements (20a, 20b), en exerçant une force de traction entre celles-ci.

2. Dispositif selon la revendication 1, dans lequel l'organe support (10a) apte à se déformer est décalé vers l'extérieur de l'aéronef par rapport à l'autre organe support (10b).

3. Dispositif selon l'une quelconque des revendications 1 et 2, dans lequel l'organe support (10a) apte à se déformer est une cloison flexible.

4. Dispositif selon l'une quelconque des revendications 1 et 2, dans lequel l'organe support (10a) apte à se déformer est une cloison articulée.

5. Dispositif selon l'une quelconque des revendications précédentes, dans lequel des bagues de guidage (28a, 28b) sont fixées dans les extrémités en vis-à-vis des deux tronçons d'axe (14a, 14b) et la barre de traction (24) est montée en ajustement glissant à l'intérieur desdites bagues de guidage (28a, 28b).

## Patentansprüche

1. Vorrichtung zur Anbringung eines Fahrwerks an einer Luftfahrzeugstruktur, wobei die Vorrichtung zwei Achsteile (14a,14b) umfasst, die auf einer gleichen geometrischen Achse (16) angeordnet sind und mit einer Armierung des Fahrwerks fest verbunden sind, zwei Halterungselemente (10a,10b), die mit der Luftfahrzeugstruktur einstückig bzw. fest verbunden sind, zwei Kugelkäfige (22a,22b), die jeweils in einem der Halterungselemente (10a,10b) befestigt sind, zwei Kugelgelenkköpfe (20a,20b), die in den Kugelgelenkkäfigen (22a,22b) angebracht und jeweils an jedem der Achsteile (14a,14b) befestigt sind sowie eine Zugstange (24), welche die zwei Halterungselemente (10a,10b) entlang der geometrischen Achse (16) verbindet, wobei eines (10a) der beiden Halterungselemente sich entlang der geometrischen Achse (16) verformen kann,
**dadurch gekennzeichnet, dass** die Zugstange (24) die Halterungselemente (10a,10b) über ihre Enden verbindet, welche sich an den Kugelgelenkköpfen (20a,20b) abstützen, indem sie untereinander eine Zugkraft ausüben.

2. Vorrichtung nach Anspruch 1, wobei das verformbare Halterungselement (10a) in Bezug auf das andere Halterungselement (10b) vom Luftfahrzeug nach außen versetzt ist.

3. Vorrichtung nach einem der Ansprüche 1 oder 2, wobei das verformbare Halterungselement (10a) eine flexible Wand ist.

4. Vorrichtung nach einem der Ansprüche 1 oder 2, wobei das verformbare Halterungselement (10a) eine mit Gelenk versehene Wand ist.

5. Vorrichtung nach einem der vorangehenden Ansprüche, wobei Führungsringe (28a,28b) an den Enden gegenüber den Achsteilen (14a,14b) befestigt sind und die Zugstange (24) im Gleitsitz innerhalb der Führungsringe (28a,28b) angebracht ist.

## Claims

1. Landing gear assembly device on an aircraft structure, the device comprising two segments (14a, 14b) of the shaft aligned along the same centre line (16) and fixed to a fitting of the landing gear, two support devices (10a, 10b) fixed to the aircraft structure, two ball joint cages (22a, 22b) fixed in each of the said corresponding support devices (10a, 10b), two ball joint balls (20a, 20b) installed in the ball joint cages (22a, 22b) and fixed to each of the corresponding shaft segments (14a, 14b) and a tension bar (24) connecting the two support devices (10a, 10b) along the said centre line (16) and one (10a) of the two support devices being deformable in the direction of the said centre line (16), **characterized in that** the tension bar (24) connects these support devices (10a, 10b) through its ends that bear on the bearing balls (20a, 20b), exerting a tension force between these bearing balls.

2. Device according to claim 1, in which the deformable support device (10a) is offset towards the outside of the aircraft more than the other support device (10b).

3. Device according to either claim 1 or 2, in which the support device (10a) that is deformable is a flexible partition.

4. Device according to either claim 1 and 2, in which the support device (10a) that is deformable is an articulated partition.

5. Device according to any one of the above claims, in which the guide rings (28a, 28b) are fixed in the ends facing the two shaft segments (14a, 14b) and the tension bar (24) is installed so that it is adjustable by sliding inside the said guide rings (28a, 28b).
